# NEUE EUROPÄISCHE PATENTSCHRIFT

(11) **EP 0 171 586 B2**
(45) Veröffentlichungstag und Bekanntmachung des Hinweises auf die Entscheidung über den Einspruch: **09.10.1996**
(45) Hinweis auf die Patenterteilung: 23.09.1987
(21) Anmeldenummer: 85108347.7
(22) Anmeldetag: 05.07.1985
(51) Int. Cl.: B60D 1/32

(54) **Reibungsbremse an Fahrzeug-Anhängerkupplungen**
Friction brake for vehicle-trailer couplings
Frein à friction pour couplages entre véhicule et remorque

(30) Priorität: 13.07.1984 DE 3425804; 27.09.1984 DE 3435375; 28.03.1985 DE 3511301
(43) Veröffentlichungstag der Anmeldung: 19.02.1986
(73) Patentinhaber: Westfalia-Werke Knöbel GmbH & Co., D-33378 Rheda-Wiedenbrück (DE)
(72) Erfinder: Knöbel, Horst, D-4840 Rheda-Wiedenbrück (DE); Braun, Dieter, Dipl.-Ing., D-4840 Rheda-Wiedenbrück (DE); Möller, Werner, Dipl.-Ing., D-4836 Herzebrock 2 (DE); Hermbusch, Gerd, Dipl.-Ing., D-4831 Langenberg (DE); Pöppelbau, Adolf, D-4840 Rheda-Wiedenbrück (DE); Peitz, Heribert, D-4835 Rietberg 1 (DE)
(74) Vertreter: Müller, Gerd, Dipl.-Ing.

(56) Entgegenhaltungen:
- DE-A- 2 841 746
- DE-A- 2 850 424
- DE-C- 1 287 373
- DE-U- 1 888 887
- DE-U- 7 911 139
- GB-A- 892 952
- GB-A- 1 380 051
- US-A- 2 127 913
- US-A- 3 049 366
- US-A- 3 770 298
- US-A- 3 989 319
- US-A- 4 114 922
- US-A- 4 549 746

## Beschreibung

"Die Erfindung bezieht sich auf eine Fahrzeuganhängerkupplung mit Reibungsbremse, bestehend aus einer Kupplungskugel und einem, diese umfassenden Kugelkupplungsgehäuse, wobei Teilabschnitte der Innenfläche des Kugelkupplungsgehäuses paarweise einander gegenüberliegende Ausnehmungen aufweisen, in denen Reibungsbremsklötze angeordnet sind, die von Stellelementen gegen die Oberfläche der Kupplungskugel andrückbar sind, wobei die Ausnehmungen des Kugelkupplungsgehäuses als kreisförmige Durchbrüche ausgebildet sind, in denen die Reibungsbremsklötze kolbenartig, freischwimmend, von den Innenseitenflächen der Durchbrüche geführt, unter elastischem Feder-Druck gehalten werden."

Reibungsbremsen dieser Art dienen der Dämpfung von Schwingungen, die innerhalb der Freiheitsgrade der Bewegungsmöglichkeiten des Kupplungskugelgehäuses um die Kugel herum während der Fahrt beider Fahrzeuge im Zugbetrieb auftreten und sich in Gier-Nick- und Wankbewegungen, sog. Schlingerbewegungen äußern.

Es sind zahlreiche Vorschläge zur Ausbildung solcher Reibungsbremsen bekanntgeworden. Gemeinsam ist diesen Ausbildungen, daß ein Paar von außerhalb der Kupplung selbst an der Tragstange der Kupplungskugel oder der Zugstange des Anhängerfahrzeugs angeordneter Träger von Reibklötzen oder -scheiben über Mitnehmerelemente relativ zueinander bewegt wird. Der Reibungsdruck zwischen den Reibklötzen bzw. -scheiben läßt sich mit Hilfe von mechanischen Stellelementen verändern, und häufig sind die Mitnehmerelemente selbst auch als zusätzliche Dämpfungsorgane in Form von Drehstäben, Gasdruck-Stoßdämpfern, Blattfedern o.dgl. ausgebildet ("Stabilisatoren", Kamper + Kaçavan Nr. 6 Ausgabe Juni 1984).

Diese Bremsen müssen teilweise zweifach in Tandemanordnung angeordnet werden und bedürfen besonderer Befestigungselemente an der Tragstange der Kupplungskugel und der Zugstange des Anhängerfahrzeugs. Die Befestigungselemente müssen genau justiert werden und erfordern deshalb eine sorgfältige Montage, das gleiche gilt für die Einstellung der Reibkraft, besonders bei der Tandemanordnung, da diese sonst leicht das Gegenteil einer Stabilisierung bewirken kann. Schwierigkeiten und besondere konstruktive Vorkehrungen bereitet auch die Notwendigkeit beim Entkuppeln die entsprechenden Elemente der Reibungsbremse voneinander zu trennen.

Zur Vermeidung eines Teils dieser Schwierigkeiten und Nachteile ist bereits vorgeschlagen worden (DE-A-28 41 746) ein paar von Reibscheiben unterhalb des Trägers der Kupplungskugel um deren vertikale Mittenachse herum drehbar zu lagern und die Mitnahmeelemente für diese Reibscheiben seitlich außen am Kugelkupplungsgehäuse anzuordnen. Auch diese Reibungsbremsenausbildung erfordert zusätzliche Befestigungselemente und eine entsprechende besondere Ausbildung des Trägers der Kupplungskugel am Zugfahrzeug und eine entsprechende angepaßte Ausbildung des Kugelkupplungsgehäuses an der Zugstange des Anhängerfahrzeugs, d.h., die Elemente der Reibungsbremse sind z. T. am Zugfahrzeug und z. T. am Anhängerfahrzeug angeordnet, so daß sich bei wechselnden Anhängerfahrzeugen für dasselbe Zugfahrzeug Anpassungsschwierigkeiten nicht vermeiden lassen. Die Reibungskupplung eignet sich im übrigen nur für die Dämpfung von Bewegungen innerhalb der Achsebenen beider Fahrzeuge der sog. Gierbewegungen.

"Weiter sind aus den GB-A-892 952 und DE-U-18 88 887 Vorschläge bekannt, in Teilabschnitten der Innenfläche des Kugelkupplungsgehäuses Ausnehmungen anzuordnen, in die die Reibungsbremsklötze eingesetzt sind. Diese werden nach der GB-A-892 952 von Schraubenbolzen beaufschlagt, die in Ausnehmungen der Rückwand vorgesehene Gewindebohrungen eingeschraubt sind und können dadurch gegen die Außenwand der Kupplungskugel gedrückt werden; während nach der DE-U-18 88 887 die in kreisförmigen Durchbrüchen des Kugelkupplungsgehäuses kolbenartig, frei schwimmend geführten Reibungsbremsklötze von oberhalb der Durchbrüche im Kugelkupplungsgehäuse angeordneten Federpaketen beaufschlagt werden. Diese beiden bekannten Ausbildungen benötigen zwar keine zusätzlichen Befestigungselemente mehr und sind auch geeignet, Bewegungen in verschiedenen Achsebenen der Fahrzeuge zu dämpfen; sie weisen aber bei der Ausbildung nach der GB-A-892 952 den Nachteil auf, daß die notwendige symmetrische Einstellung der jeweilig richtigen Reibungsbremskraft wegen zweier, für sich einzustellender Schraubenbolzen nicht nur schwierig ist, sondern schon nach kurzer Betriebszeit wieder zu Unsymmetrien neigt, weil die Reibungsbremsklötze unterschiedlich beansprucht und deshalb während des Fahrbetriebes abgenutzt werden. Auch das Lösen der Reibungsbremsklötze mittels der beiden Schraubenbolzen ist sehr umständlich und erfordert ggfs. die Zuhilfenahme von Zusatzwerkzeugen. Auch bei der Ausbildung nach der DE-U-18 88 887 ist ebenfalls keine zuverlässige, während des Betriebes gleichbleibende symmetrische Einstellung der Reibungsbremsklötze möglich, weil die voneinander unabhängig beide, den einen und den anderen Reibungsbremsklotz beaufschlagenden Federpakete schwierig aufeinander abzustimmen sind und wegen der geringen Abmaße des für ihre Anbringung verfügbaren Raums oberhalb der Durchbrüche des Kugelkupplungsgehäuses verhältnismäßig klein bemessen werden müssen und deshalb auch nur kleine Druckkräfte aufzubringen vermögen mit der Folge, daß auch bei dieser Ausbildung schon nach kurzer Betriebszeit wieder Unsymmetrien der Reibungsbremskräfte auftreten.

Schließlich sind aus GB-A-1 380 051 noch zwei weitere Ausbildungsformen von Fahrzeuganhängerkupplungen bekannt, bei denen die Reibungsbremsklötze federbeaufschlagt sind. Bei der einen Ausbildungsform besteht das Kugelkupplungsgehäuse aus scharnierartig miteinander verbundenen, die Kupplungskugel einfassenden Gehäusehälften, die selbst als Reibungsbremsklötze wirksam werden. Die Reibungskraft wird mit Hilfe von Reibflächen, die innenseitig unmittelbar an den Gehäusehälften selbst vorgesehen sind, zwar symmetrisch und konstant auf die Kupplungskugel aufgebracht. Es ergibt sich aber der Nachteil, daß die beiden miteinander verbundenen Hälften des Kupplungskugelgehäuses nicht nur die Reibkräfte elastisch auf die Kupplungskugel übertragen, sondern gleichzeitig fest miteinander verriegelt sein müssen, damit die eigentliche Kuppelfunktion des Kugelkupplungsgehäuses zwischen Fahrzeug und Anhänger sicher gewährleistet ist. Da bei dieser Ausbildung der Fahrzeuganhängerkupplung, anders als bei den gattungsgemäßen Ausbildungen mit einteiligem Kugelkupplungsgehäuse und in diesem geführten Reibungsbremsklötzen, die eine der genannten Forderungen immer nur zu Lasten der anderen Forderung erfüllt werden kann, fand diese Ausbildung keine Einführung in die Praxis. Bei der zweiten Ausbildung nach dieser GB-A-1 380 051 ist ebenfalls kein gattungsgemäßes Kugelkupplungsgehäuse vorhanden, sondern nur zwei unterschiedlich angeordnete Reibungsbremsklötze. Der eine ist fest mit dem einen Schenkel eines starren U-Profils verschraubt, während der andere in dem anderen Schenkel dieses U-Profils verschieb- und anstellbar, sowie gegen diesen Schenkel durch ein Federpaket elastisch abgestützt ist. Auch diese Ausbildung bringt den Nachteil mit sich, daß die eigentliche Kuppelfunktion nicht sicher gewährleistet ist, weil die Reibungsbremsklötze allein den Kupplungsschluß gewährleisten müssen; darüber hinaus muß die gesamte Reibungsbremskraft von einem einzigen Federpaket aufgebracht werden, für das auch nur ein beschränkter Raum oberhalb des einen der Reibungsbremsklötze zur Verfügung steht."

"Der Erfindung liegt die Aufgabe zugrunde, die gattungsgemäße Ausbildung einer Fahrzeuganhängerkupplung so zu verbessern, daß die Reibungsbremsklötze während des Fahrbetriebes nicht nur gleichbleibend druckbeaufschlagt werden und deren unterschiedlicher Abnutzung durch automatische Nachstellung Rechnung getragen wird, sondern zusätzlich die Möglichkeit einer leichten Bedien- und Einstellbarkeit dieser Reibungsbremsklötze von außen her geschaffen wird.

Diese Aufgabe wird dadurch, gelöst, daß die Reibungsbremsklötze die Träger aufweisen, die rückseitig symmetrisch von den Armen einer Spannzange beaufschlagbar sind, die aus einer, die vordere Umfangsseite des Kugelkupplungsgehäuses bogenartig umfassen, fest mit diesem verbundenen Spange und an deren Enden angelenkten Zangen-Armen besteht, und bei der zwischen den Zangenarmen an sich bekannte Stell-, Spann- und Festlegeelemente angeordnet sind. Durch diese Anordnung und Ausbildung einer Zange auf dem Kugelkupplungsgehäuse wird neben einfacher Bauweise eine leichte Zugänglichkeit der Stellelemente für Einstellung und Wartung der Stell-, Spann- und Festlegeelemente geschaffen, da diese ebenfalls außerhalb des Kugelkupplungsgehäuses angeordnet sind. Hinzu kommt dabbbei der Vorteil, daß für diese Elemente große, ggfs. handelsübliche Stell- und Federelemente verwendet werden können; die besonders einfache Bauweise und leichte Zugänglichkeit der Zangenelemente selbst ergibt sich dabei aus der Anwendung und Bauweise der Zange, weil die über die Länge der gesamten Kupplung verlaufenden Zangenarme mit einer entsprechend günstigen Hebelwirkung verwendbar sind und die Gestaltung einer kompakten Ausbildungsform der Kupplung möglich gemacht wird, weil zwischen den Armen der Zange noch genügend Raum für die eigentlichen Bedienelemente der Kupplung selbst verbleibt.

Wie die Erfindung weiter vorsieht, können Teile der Kupplungskugel als Gegenreibflächen für die Reibflächen der Reibungsbremsklötze ausgebildet werden. Ferner können die Träger der Reibungsbremsklötze zweckmäßig lösbar mit den Armen der Spannzange verbunden werden. Die Stell-, Spann- ünd Festlegeelemente können auch einen motorischen Antrieb mit Fernbedienung und -anzeige und auch eine an sich bekannte Schnellösevorrichtung aufweisen."

Es hat sich im praktischen Betrieb der erfindungsgemäßen Reibungsbremse gezeigt, daß diese schon mit geringen Reibwerten von 0,2 bis 0,3 und verhältnismäßig geringen Ueaufschlagungsdrucken bei Einachsanhängerfahrzeugen, besonders der Gewichtsklasse 0,75-3 t eine wirksame Dämpfung aller Schwingungen innerhalb der Freiheitsgrade der Kugelkupplung erzielt. Diese Wirkungen wurden, in geringem Maße durch eine nasse oder auch fettige Oberflächenbeschaffenheit der Kupplungskugel, beeinträchtigt. Da sich die Reibungsbremse an dem auf der Zugstange des Anhängerfahrzeugs befindlichen Kupplungskugelgehäuse befindet, ist im übrigen eine Anpassung der Größenordnung der Reibungsbremsklötze an das Gewicht des Anhängerfahrzeugs möglich, während die entsprechende Kupplungskugel am Zugfahrzeug immer die gleiche sein kann. "Die Stell- und Festlegeelemente zwischen den Armen der am Kupplungsgehäuse ..." angeordneten Spanngabel oder Spannzange können aus einer Gewindespindel mit einer den eingestellten Beaufschlagungsdruck anzeigenden Skalenmarkierung bestehen oder aus einer Keilverstellung. Die Spindel kann auch mit Fernbetätigung motorisch angetrieben werden, wobei der eingestellte Beaufschlagungsdruck über Fernanzeige im Zugfahrzeug ablesbar gemacht werden kann. Es ist dabei auch denkbar, die Einstellung in Abhängigkeit von der jeweiligen Geschwindigkeit des Zugfahrzeuges über eine Automatik zu ändern. Die Arme können über Federn oder Gasfedern vorgespannt werden und die Schnellösevorrichtung kann aus einem Kniehebelverschluß bekannter Bauart bestehen. "Diese Ausbildung mit seitlich in Ausnehmungen im Kugelkupplungsgehäuse geführten Trägern der Reibungs-Bremsklötze und die Anordnung der entsprechenden, die Träger beaufschlagenden Stellelemente außen auf dem Kupplungskugelgehäuse bringt es ..." mit sich, daß aufgrund der erforderlichen, verhältnismäßig großen Ausnehmungen im Kupplungskugelgehäuse die Führungsflächen der Träger in den Blenden dieses Gehäuses verhältnismäßig schmal gehalten werden müssen, und daß die Spalte zwischen den Reibungs-Bremsklötzen und den Führungsflächen verschmutzen und bei niedrigen Temperaturen vereisen können.

Eine weitere, nicht vom Schutz des Anspruchs 1 erfasste Ausbildung sieht vor, daß die Anordnung solcher Ausnehmungen im Kugelkupplungsgehäuse nicht notwendig ist und die bei Fahrzeug-Anhängerkupplungen der gattungsgemäßen Ausbildung ohnehin vorhandene kugelabschnittförmige Anlagefläche der über Stellelemente radial in Richtung auf die Kupplungskugel zu und von dieser weg beweg- und verriegelbaren Kupplungspfanne als Reibungs-Bremsklotz ausgebildet ist. Zweckmäßig wird dabei die dieser kugelabschnittförmigen Anlagefläche radial gegenüberliegende Innenfläche des Kupplungskugelgehäuses mit einer reibungsverstärkenden Oberfläche versehen. Wenn dabei die Kupplungspfanne aus einem U-Bügel besteht, dessen U-Steg die kugelabschnittförmige Auflagefläche bildet, kann ein im Kugelkupplungsgehäuse verschieb- und verriegelbar angeordneter Gleitkeil mit seiner Keilfläche die Rückseite des Stegs des U-Bügels beaufschlagen. Weist das Kugelkupplungsgehäuse eine rückwärtige Verlängerung auf, dann kann der Gleitkeil am unteren Ende einer in einem auf der Verlängerung des Kugelkupplungsgehäuses aufstehenden Hülsenansatz geführten Schubstange angeordnet sein, deren anderes Ende ein Gewinde trägt, das in einer auf dem Hülsenansatz gelagerten Drehmutter sitzt, wobei der Gleitkeil rückseitig von einem im Kugelkupplungsgehäuse angeordneten Gleitanschlag abgestützt ist. Die Drehmutter kann dabei einen oder mehrere einarmige radiale Stellhebel aufweisen. Weiterhin besteht die Möglichkeit, den Gleitkeil relativ zu der Schubstange in deren Längsachse verschieb- und festlegbar auszubilden. Wie die Erfindung weiter vorsieht, kann der Gleitkeil auch über die Stellelemente der Kupplungspfanne in und außer Beaufschlagungsstellung zu der Rückseite des Steges des U-Bügels bringbar sein.

Um den Druck der Arme der Spannzange auf die Reibbremsklötze während der Fahrt, unbeeinflußt von den auftretenden Stößen auf die Kupplungsverbindung möglichst gleichmäßig aufrechtzuerhalten, damit die gewünschte Dämpfung der Schlingerbewegungen in jedem Bewegungszustand von Kupplungsgehäuse und Kupplungskugel erreicht wird, muß sichergestellt werden, daß der je nach den Betriebsbeanspruchungen mehr oder weniger starke Verschleiß der Reibbremsklötze auch dann, wenn schon ein großer Abnutzungsgrad eingetreten ist, keinen wesentlichen Einfluß auf die Größe des Drucks der Zangenarme auf die Reibbremsklötze mit sich bringt.

Die Ausbildung der Reibungsbremse kann dabei, wie die Erfindung weiter vorsieht, so weitergebildet werden, daß ein gleichmäßiger gleichbleibender Druck der Arme der Spannzange auf die Reibbremsklötze unter den oben erwähnten Beanspruchungen aufrechterhalten wird und dieser Druck auch durch die Abnutzung der Reibbremsklötze keine wesentliche Änderung erfährt.

Dies kann erfindungsgemäß dadurch erreicht werden, daß die Spannelemente aus Gasfedern bestehen, die die Enden der Arme der Spannzange voneinander wegdrücken. Bei als einarmige Hebel ausgebildeten Armen, deren eines Endenpaar in einem Bereich vor der Mitte der Kupplungskugel und seitlich von dieser abgelenkt ist, gehen die Mittenabschnitte der Arme abgewinkelt kreuzweise übereinanderliegend in etwa parallel verlaufende Endabschnitte über. Die Arme können auch als zweiarmige Hebel mit einem in einem Bereich zwischen der Mitte der Kupplungskugel und den Enden der Arme angeordneten Schwenkgelenk ausgebildet sein.

Die Gasfeder zwischen den Enden der Arme der Spannzange hält durch ihre Stoßdämpferwirkung den Auflagedruck der Reibbremsklötze auf die Gegenreibfläche der Kupplungskugel auch bei Stoßbeanspruchungen aufrecht und ändert diesen Druck auch dann nicht, wenn sich der Abstand zwischen den beiden Enden der Arme der Spannzange durch den Verschleiß der Reibungsbeläge der Reibbremsklötze vergrößert.

Die Gasfeder ist bei den vorstehend beschriebenen Ausbildungsformen der Reibungsbremse am Endabschnitt des einen der Arme angelenkt und mit dem anderen Ende lösbar in eine Ausnehmung einsetzbar, die eine einseitig offene Gelenköse bildet. Zum Öffnen dieser Verbindung der beiden Arme, d.h. zum Lösen der Reibungsbremse ist es bei dieser Ausbildung notwendig, die Gasfeder von Hand zusammenzudrücken und ihr eines Ende aus der Gelenköse herauszunehmen. Diese Handhabung bringt hin und wieder Schwierigkeiten für den Benutzer mit sich insbesondere dann, wenn das Gehäuse der Gasfeder naß oder mit Fettigkeit überzogen ist. Darüber hinaus zwingt diese Art der Konstruktion dazu, die Gasfeder mit ihrer Stoßstange fest an dem einen Endabschnitt anzulenken und den für die offene Gelenköse bestimmten Gelenkzapfen am Zylinderende der Feder anzubringen.

Diese Schwierigkeiten lassen sich beseitigen und machen eine leichtere Handhabung der Gasfeder beim Öffnen der Verbindung der beiden Endabschnitte möglich, wenn zwischen der an den Endabschnitt eines der Arme angelenkten Gasfeder und dem Endabschnitt des anderen Armes ein zweiarmiger Hebel angeordnet ist, der einerseits mit einer Lenkachse an die Stoßstange der Gasfeder und andererseits mit der anderen Lenkachse am Endabschnitt des anderen Armes angelenkt ist, wobei die eine Lenkachse an der Gasfeder in und außer Totpunktlage zwischen den beiden Anlenkungen an den Endabschnitten der beiden Arme bringbar ist.

Wie die Erfindung weiter vorsieht, kann dabei die in und außer Totpunktlage bringbare Lenkachse des zweiarmigen Hebels in einem Lagerbock lagern, der mit radialem Abstand um eine lagerbolzenförmige Verlängerung der Endabschnitte der Arme schwenkbar ist, wobei diese lagerbolzenförmige Verlängerung um eine, etwa senkrecht zur Lagerbolzenachse liegende Achse schwenkbar an den Endabschnitten der Arme angelenkt ist, wobei die lagerbolzenförmige Verlängerung aus einem, auf eine an den Endabschnitten angelenkte U-Lasche aufgesetzten Lagerbolzen bestehen kann. Es kann bei dieser Anordnung ein Handhebel verwendet werden, der um eine etwa senkrecht zur Lenkerachse liegende Achse schwenkbar in dem Lagerbock gelagert ist. Eine weitere Möglichkeit der Anordnung des Arms besteht darin, außerhalb der Endabschnitte beider Arme einen etwa parallel zur Längsachse der Gasfeder liegenden Handhebel anzuordnen.

Diese Ausbildungsform erlaubt es, die Endabschnitte der beiden Arme, die durch die Gasfeder über den zweiarmigen Hebel in Totpunktlage des Anlenkpunktes des Hebels auseinandergedrückt und durch die Spannung der Gasfeder beaufschlagt werden, durch einfaches Schwenken des zweiarmigen Hebels mittels des Handhebels unter Überwindung der Totpunktlage vom Beaufschlagungsdruck der Gasfeder zu entlasten und die Gelenkverbindung zu öffnen. Ebenso einfach läßt sich die Verbindung durch Einschwenken des zweiarmigen Hebels in die Totpunktlage herstellen und sichern.

Die Erfindung wird anhand der in den Zeichnungen dargestellten verschiedenen Ausführungsbeispiele näher erläutert. In der Zeichnung zeigen
Fig. 1 die Teilansicht einer Ausbildungsform der Vorrichtung von der Seite gesehen,
Fig. 2 die teilweise geschnittene Draufsicht auf die Vorrichtung,
Fig. 3 die Teilansicht eines Schnittes nach der Linie A-A durch Fig. 2,
Fig. 4 eine andere Ausbildung der Anhängerkupplung im Längsschnitt,
Fig. 5 die Draufsicht auf Fig. 4 teilweise geschnitten,
Fig. 6 die Draufsicht auf eine weitere Ausbildungsform der Anhängerkupplung, teilweise geschnitten,
Fig. 7 eine weitere Ausbildungsform der Anhängerkupplung entsprechend der Darstellung nach Fig. 6,
Fig. 8 die perspektivische Darstellung einer weiteren Ausbildungsform der Anhängerkupplung von der Seite gesehen und
Fig. 9 die Anhängerkupplung nach Fig. 8 mit unterschiedlichen Stellungen des Handhebels.

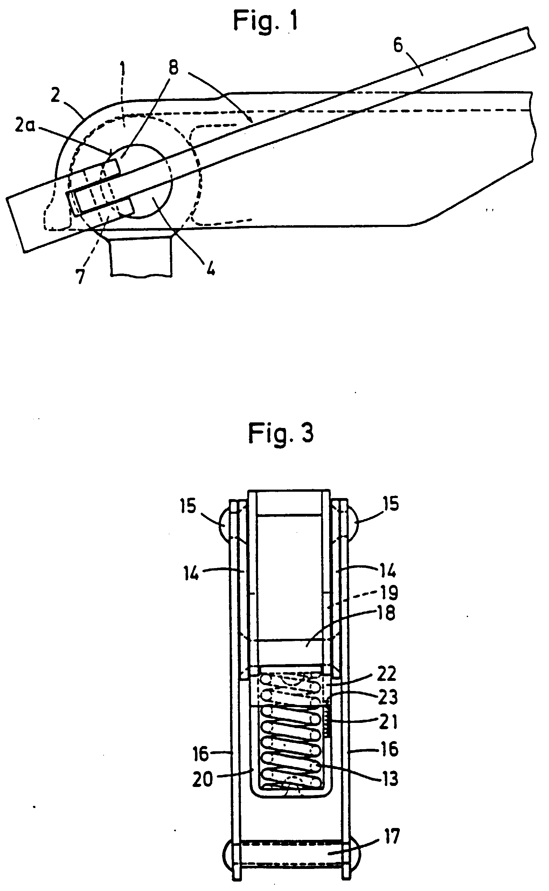

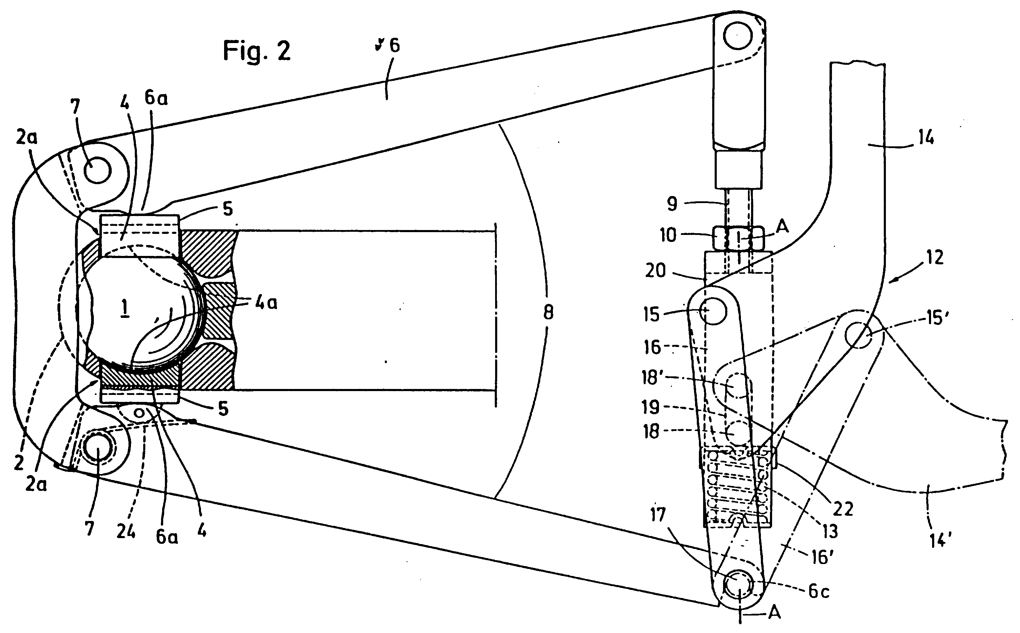

Wie aus Fig. 1 in Verbindung mit Fig. 2 zu ersehen, weist das die Kupplungskugel 1 umfassende Kupplungskugelgehäuse 2, hier kreisförmig ausgebildete, sich gegenüberliegende Durchbrüche 2a auf, in denen die Reibbremsklötze 4 an den Innenseitenwandungen der Durchbrüche 2a mit ihren kreisscheibenförmigen Trägern 5 an deren Innenseitenwänden kolbenartig geführt sind. Die die Oberfläche der Kupplungskugel 1 beaufschlagende Fläche 4a der Relbbremsklötze 4 ist kugelabschnittsförmig konkav nach innen gewölbt. Die nach außen gewandte Kreisfläche des Trägers 5 der Reibbremsklötze 4 wird (vgl. Fig. 2) von dem gewölbten Ansatz 6a des Zangenarms 6 beaufschlagt, der mit einem Gelenk 7 an dem einen Ende einer mit dem Kugelkupplungsgehäuse 2 fest verbundenen Zangenspange 8 angelenkt ist, deren anderes Ende über ein entsprechende Gelenk 7 mit dem anderen Zangenarm 6 gelenkig verbunden ist. Die freien Enden beider Zangenarme 6 sind hier durch eine Gewindespindel mit Gewindemutter 10, einen Hebelspannverschluß 12 und der Vorspannfeder 13 miteinander verbunden. Der Hebelspannverschluß 13 besteht aus einem Spannhebel 14, der mit Drehbolzen 15 an eine Doppellasche 16 angelenkt ist, die sich mit einem Distanzbolzen 17 in eine Kupplungsausnehmung 6c des der Spindel 9 abgewandten Zangenarms 6 schwenkbar einhängen läßt.

In Richtung von der Spindel 9 weg, im Abstand von den Drehboozen 15 weist der Spannhebel 14 ein hier bolzenförmiges Spannanschlagstück 18 auf, das in Richtung der Mittenachse der Spindel 9 in einem die Spindelmutter 10 tragenden Rahmen 20 vorgesehenen Schlitzführungspaar 19 in Richtung der Mittenachse der Spindel 9 hin und her beweglich ist.

Das Spannanschlagstück 18 wird dabei von der Vorspannfeder 13 beaufschlagt, die sich in dem die Spindelmutter 10 tragenden Rahmen 20 abstützt.

Der Spannhebel 14 kann aus der in Fig. 2 in vollen Linien dargestellten Spannstellung in die in strichpunktierte Linien angedeutete Endspannstellung um den Distanzbolzen 17 schwenkend gebracht werden, wobei sich die Doppellasche 16 in die Endstellung 16' bewegt und das Spannanschlagstück 18 in der Schlitzführung 19 aus einer-hier unteren - Stellung in Richtung auf die Spindel 19 hin in die obere Stellung 18' geführt wird, so daß sich die Vorspannfeder 13 entspannt und damit auch der Druck der gewölbten Ansätze 6a, der Zangenarme 6 auf die Träger 5 der Reibbremsklötze 4 aufgehoben wird. Die Spannlänge der Vorspannfeder, die sich in Spannstellung des Hebelspannverschlusses 12 durch Drehen der Spindel bzw. der Spindelmutter 10 verstellen läßt, wird durch eine am Rahmen 20 angeordnete Skala 21 und einen an einer Abdeckplatte 22 der Vorspannfeder 13 angeordneten Anzeigekeil 23 ablesbar gemacht.

Wie aus Fig. 2 weiter hervorgeht, beaufschlagt eine um den Achsbolzen der Gelenkes 7 des Zangenarmes 6 gelegte Rückstellschenkelfeder 24 die Rückseite des Trägers 5 für die Reibbremsklötze 4 und verhindert damit ein Herausrutschen der Reibbremsklötze 4 aus den diese führenden Durchbrüchen 2a des Kupplungskugelgehäuses 2.

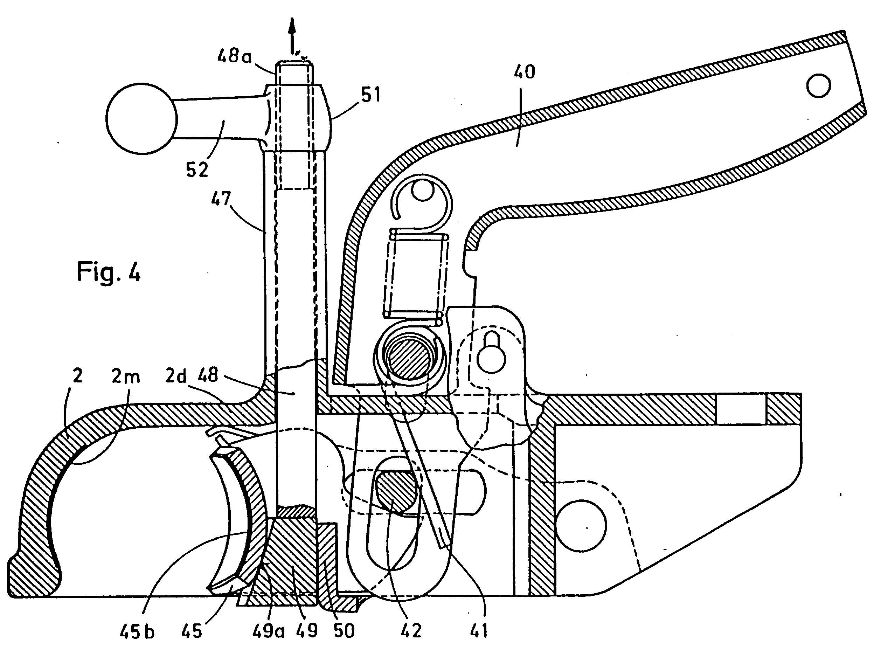

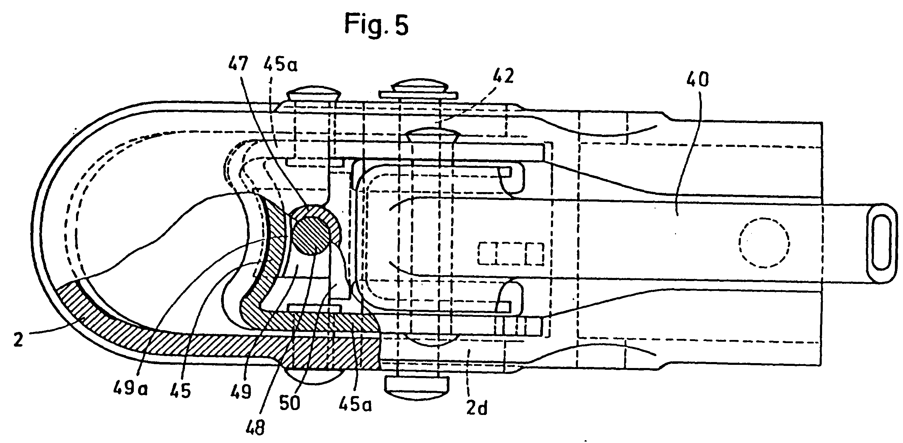

Beim Ausführungsbeispiel nach den Fig. 4 und 5 weist das Kupplungskugelgehäuse 2 eine rückwärtige Verlängerung 2d in bzw. auf der die Betätigungs- und Stellelemente 41, 42 und 43 angeordnet sind, mit deren Hilfe die Kupplungspfanne 45 auf die (nicht dargestellte) Kupplungskugel zu und von dieser weg beweg- und verriegelbar ist. Die Kupplungspfanne 45 ist hier als der Steg eines U-Bügels (Fig. 2) mit den Bügelarmen 45a ausgebildet. Die Kupplungspfanne 45 weist eine reibungsverstärkende Oberfläche der kugelabschnittsförmigen Anlagefläche 45b auf und ebenso die dieser Fläche gegenüberliegende Innenfläche 2m des Kupplungskugelgehäuses 2. Weiter ist auf der Verlängerung 2d des Kupplungskugelgehäuses ein Hülsenansatz 47 aufstehend befestigt, in dem eine Schubstange 48 gleitend gelagert ist, die am unteren Ende einen Gleitkeil 49 trägt, dessen Keilfläche 49a an die Rückseite der Kupplungspfanne 45 anlegbar ist und der rückseitig von einem an der Verlängerung 2d des Kugelkupplungsgehäuses 2 zwischen die Bügelarme 45b ragenden Gleitanschlag 50 abgestützt ist. Die Schubstange 48 weist an ihrem oberen Ende ein Gewinde 48a auf, das in einer Drehmutter 51 sitzt, die in den Hülsenansatz 47 drehbar lagert und einen radialen Stellhebel 52 aufweist.

Nachdem das Kupplungskugelgehäuse 2 auf die (nicht dargestellte) Kupplungskugel des Anhängerfahrzeugs aufgesetzt worden ist und die Kupplungspfanne 45 mit Hilfe der Stellelemente 40, 41, 42 auf die Kupplungskugel hin in die dargestellte Kupplungslage gebracht wurde, kann durch Drehen der Drehmutter 51 die Schubstange 45 in Richtung des dargestellten Pfeils nach oben bewegt und damit die Kupplungspfanne 45 über den Gleitkeil 49 und dessen Keilfläche 49a gegen die Kupplungskugel gedrückt werden. Der Anpreßdruck läßt sich dabei den jeweiligen Erfordernissen entsprechend vergrößern oder verkleinern. Zum Lösen der Fahrzeugkupplung muß dann die Schubstange 45 mit dem Gleitkeil 49 zunächst entgegen der Richtung des genannten Pfeils durch Drehen der Drehmutter 51 so weit nach unten bewegt werden, daß sich die 45 nach hinten (in der Zeichnung nach rechts) in ihre Ausgangsstellung zurück bewegen kann, ehe sich dann die Fahrzeugkupplung lösen läßt.

Um diesen Vorgang zu vereinfachen, kann der Gleitkeil 49 auch auf nicht dargestellte Weise so angeordnet werden, daß er sich relativ zur Schubstange 48 in deren Längsachse verschieben und festlegen läßt, d.h. er kann dann aus einer durch die Stellung der Drehmutter 51 bestimmten Lage z. B. der gezeichneten nach unten wegstoßen und damit der Rückzugweg der Kupplungspfanne 45 freigegeben werden. Nach Wiederaufsetzen des Kupplungskugelgehäuses, 2 auf eine Kupplungskugel und das Einfahren der Kupplungspfanne 45 in die entsprechende Verriegelungsstellung nach Betätigung der Elemente 40, 41, 42 kann der Gleitkeil 49 dann durch Hochziehen relativ zur Schubstange 45 wieder in die (gezeichnete) Stellung eingebracht werden, in der er sich vorher befand. Eine solche Bewegung des Gleitkeils 49 läßt sich auch über entsprechende Verbindungshebel in Form einer Zwangssteuerung mit der Bewegung der Elemente 40, 41, 42 verbinden.

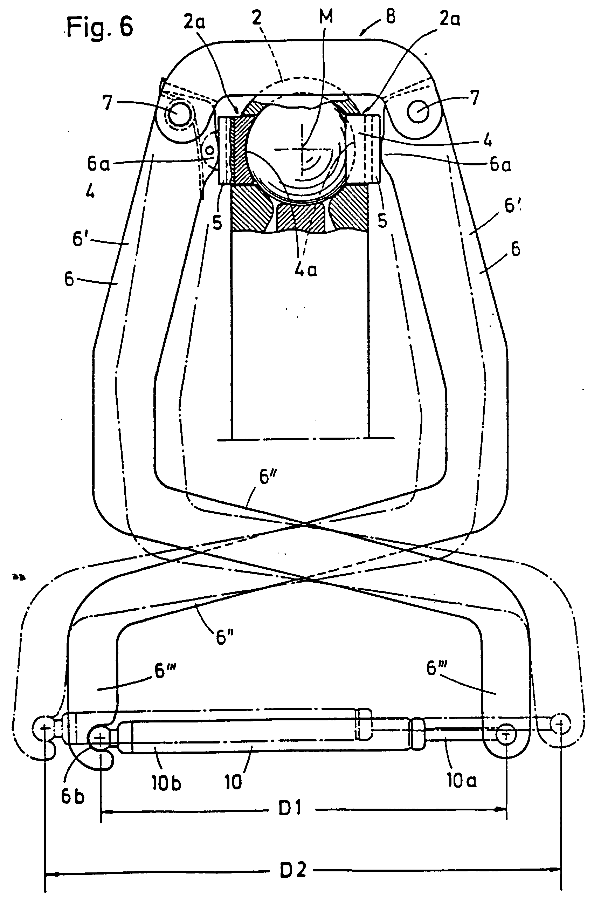

Wie aus Fig. 6 zu ersehen, weist bei diesem Ausführungsbeispiel das die Kupplungskugel 1 umfassende Kupplungskugelgehäuse 2 kreisförmig ausgebildete, sich gegenüberliegende Durchbrüche 2a auf, in denen die Reibbremsklötze 4 an den Innenseitenwandungen der Durchbrüche 2a mit ihren kreisscheibenförmigen Trägern 5 an deren Innenseitenwänden kolbenartig geführt sind. Die die Oberfläche der Kupplungskugel 1 beaufschlagende Fläche 4a der Reibbremsklötze 4 ist kugelabschnittsförmig konkav nach innen gewölbt. Die nach außen gewandten Kreisflächen der beiden Träger 5 der Reibbremsklötze 4 wird von den gewölbten Ansätzen 6a der Anfangsabschnitte 6' der beiden Zangenarme 6 beaufschlagt. Diese Anfangsabschnitte 6' sind in einem Bereich vor der Mitte M der Kupplungskugel 1 und seitlich von dieser mit Schwenkgelenken 7, hier an den Enden einer mit dem Kugelkupplungsgehäuse fest verbundenen Zangenspange 8 angelenkt.

Die Mittenabschnitte 6" beider Zangenarme 6 liegen abgewinkelt kreuzweise übereinander und gehen in etwa parallel verlaufende Endabschnitte 6"' über. Zwischen den beiden Endabschnitten 6"' befindet sich die Gasfeder 10, deren Stoßstange 10a und deren Zylindergehäuse 10b jeweils mit dem einen bzw. dem anderen Endabschnitt 6"' der Zangenarme 6 gelenkig verbunden ist, wobei die eine dieser Gelenkverbindungen, hier die des Zylindergehäuses 10b, lösbar in eine U-Ausnehmung 6b einschiebbar ist.

Die in vollen Linien wiedergegebene Stellung der Zangenarme 6 entspricht der Stellung, die sich bei noch nicht abgenutzten frischen Reibbremsklötzen 4 ergibt, der Abstand zwischen den beiden Endabschnitten 6"' entspricht dann dem geringsten Abstand, und die strichpunktiert wiedergegebene Stellung der Zangenarme 6 weist einen Abstand D2 auf, der sich einstellt, wenn die Abnutzung der Reibbremsklötze ihr größtes Maß erreicht hat.

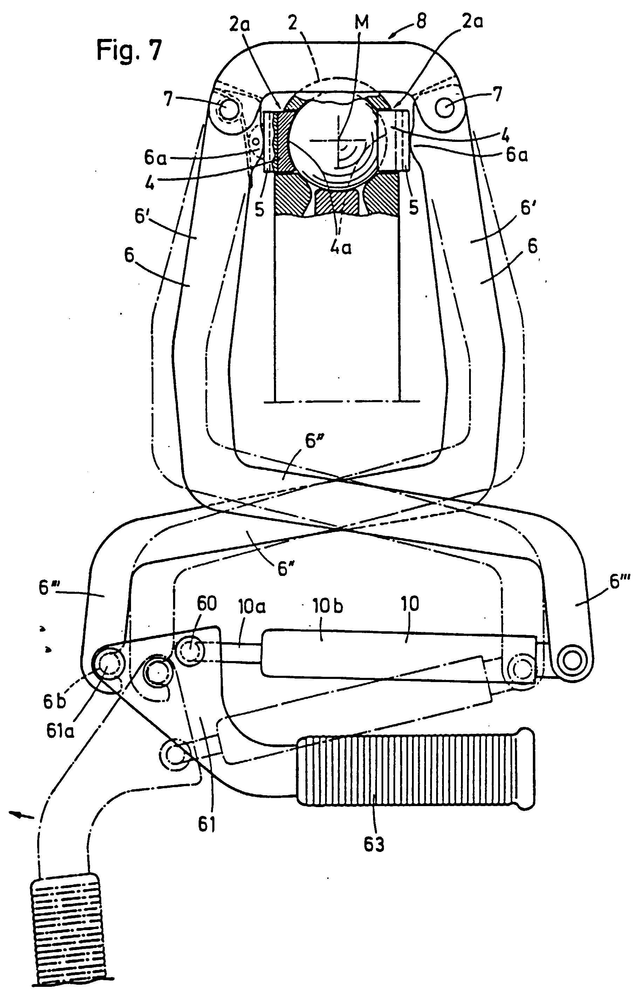

Beim Ausführungsbeispiel nach Fig. 7 weist das die Kupplungskugel 1 umfassende Kupplungskugelgehäuse 2 kreisförmig ausgebildete sich gegenüberliegende Durchbrüche 2a auf, in denen die Reibungsbremsklötze 4 an den Innenseitenwandungen der Durchbrüche 2a mit ihren kreisscheibenförmigen Trägern 5 an deren Innenseiten kolbenartig geführt sind. Die die Oberfläche der Kupplungskugel 1 beaufschlagende Fläche 4a der Reibungsbremsklötze 4 ist kugelabschnittsförmig konkav nach innen gewölbt. Die nach außen gewandten Kreisflächen der beiden Träger 5 der Reibbremsklötze 4 werden von den gewölbten Ansätzen 6a der Anfangsabschnitte 6' der beiden Zangenarme 6 beaufschlagt. Diese Anfangsabschnitte 6' sind in einem Bereich vor der Mitte M der Kupplungskugel 1 seitlich von dieser mit Schwenkgelenken 7 hier an den Enden einer mit dem Kugelkupplungsgehäuse fest verbundenen Zangenspange 8 angelenkt. Die Mittenabschnitte 6" beider Zangenarme 6 liegen abgewinkelt kreuzweise übereinander und gehen in etwa parallel verlaufende Endabschnitte 6"' über. Zwischen den beiden Endabschnitten 6"' befindet sich die Gasfeder 10, deren Zylindergehäuse 10b an dem Endabschnitt 6" angelenkt ist, während die Stoßstange 10a mit einem Gelenk 60 fest an den einarmigen Hebel 61 angelenkt ist, dessen anderen Schwenkpunkt ein Lagerzapfen 61a bildet, der in die U-förmig offene Lageröse 6b des Endabschnittes 6"' des anderen Armes 6 einsteckbar ist. An dem zweiarmigen Hebel 61 ist weiter ein Handhebel 63 angeordnet, der etwa parallel zur Mittenachse der Gasfeder 10 liegt. Der einarmige Hebel 61 kann aus der in vollen Linien dargestellten Schließlage durch Schwenken des Handhebels 63 um das von der Lageröse 6b und dem Zapfen 61a gebildete Gelenk unter Ausschwenken des Gelenks 60 aus der Totpunktlage in die strichpunktiert angedeutete Öffnungsstellung geschwenkt werden und umgekehrt.

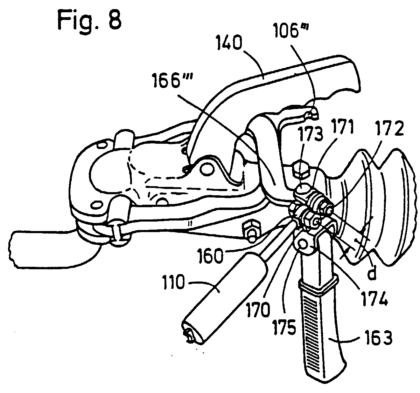

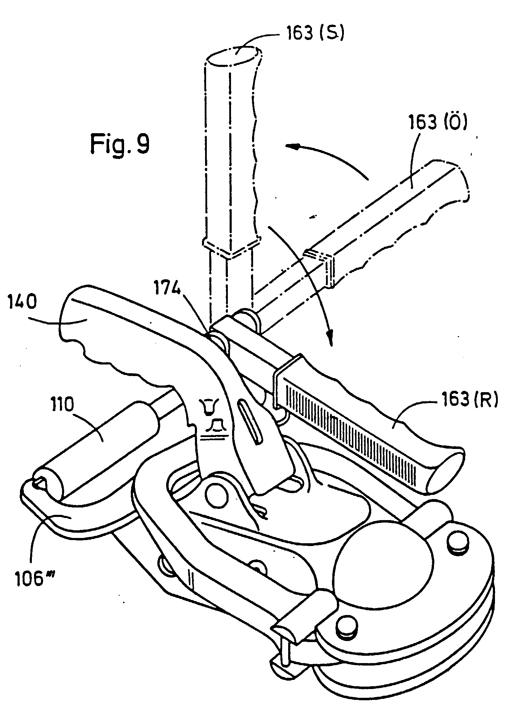

Beim Ausführungsbeispiel nach Fig. 8 und 9 lagert eine Lenkerachse 160, die hier mit der Stoßstange 110a der Gasfeder 110 verbunden ist in einem Lagerbock 170, der mit radialem abstand d um einen Lagerbolzen 172 schwenkbar ist, der als Verlängerung des Armendabschnittes 106"' angesehen werden kann und bei dieser Ausbildungsform aber seinerseits an einer Schwenklasche 171 angeordnet ist, die ihrerseits um diesen Armendabschnitt 106"' schwenkbar ist. Als Lagerachse dient dabei ein Lagerbolzen 173, dessen Achse etwa senkrecht zur Achse des Lagerbolzen 172 verläuft. An den Lagerbolzen 170 ist eine weitere Lagerlasche 174 angesetzt, in der der Handhebel 163 schwenkbar um einen Achsbolzen 175 lagert, dessen Achse etwa senkrecht sowohl zur Achse des Lagerbolzens 172 als auch zu der des Lagerbolzens 173 verläuft.

Wie in Fig. 9 verdeutlicht, wird durch Schwenken des Handhebels 163 aus der Stellung (Ö) in die Stellung (S) die in den anderen Armendabschnitt 106"' eingelegte Gasfeder 110 gespannt, wobei der Handhebel 163 den Lagerbock 170 um den Lagerbolzen 172 und - drückt dabei die Lenkerachse 160 über die Totpunktlage, mit der Folge, daß die beiden Armendabschnitte 106"' totpunktverriegelt auseinandergedrückt bleiben. Anschließend wird der Handhebel 163 in der Lagerlasche 174 in die Stellung (R) geschwenkt mit der Folge, daß der Armhebel 163 die Handhabung des Bedienhebels 140 der Anhängerkupplung nicht behindert.

## Patentansprüche

1. Fahrzeug-Anhängerkupplung mit Reibungsbremse, bestehend aus einer Kupplungskugel (1) und einem, diese umfassenden Kugelkupplungsgehäuse (2), wobei Teilabschnitte der Innenfläche des Kugelkupplungsgehäuses (2) paarweise einander gegenüberliegende Ausnehmungen (2a). aufweisen, in denen Reibungsbremsklötze (4) angeordnet sind, die von Stellelementen gegen die Oberfläche der Kupplungskugel (1) andrückbar sind, wobei die Ausnehmungen des Kugelkupplungsgehäuses (2) als kreisförmige Durchbrüche (2a) ausgebildet sind, in denen die Reibungsbremsklötze (4) kolbenartig, frei schwimmend von den Innenseitenflächen der Durchbrüche (2a) geführt, unter elastischem Feder-Druck gehalten werden,
**dadurch gekennzeichnet,** daß die Reibungsbremsklötze (4) Träger (5) aüfweisen, die rückseitig symmetrisch von den Armen einer Spannzange (6) beaufschlagbar sind, die aus einer, die vordere Umfangsseite des Kugelkupplungsgehäuses (2) bogenartig umfassenden, fest mit diesem verbundenen Spange (8) und an deren Enden angelenkten Zangen-Armen (6) besteht, und bei der zwischen den Zangenarmen (6) an sich bekannte Stell-, Spann- und Festlegeelemente (9, 10) angeordnet sind.

2. Fahrzeuganhängerkupplung nach Anspruch 1,
**dadurch gekennzeichnet,**
daß die Spannzange als eine aus einem einteiligen Federstahlstück bestehende Spanngabel ausgebildet ist, deren die vordere Umfangsseite des Kugelkupplungsgehäuses (2) umfassender gebogener Spangenteil (8) auf dieses auf- und abschiebbar ist.

3. Fahrzeuganhängerkupplung nach Anspruch 1,
**dadurch gekennzeichnet,**
daß Teile der Außenfläche der Kupplungskugel (1) als Gegenreibflächen für die Reibungsbremsklötze (4) ausgebildet sind.

4. Fahrzeuganhängerkupplung nach Anspruch 1,
**dadurch gekennzeichnet,**
daß die Träger (5) mit den Armen (6) lösbar verbunden sind.

5. Fahrzeuganhängerkupplung nach den Ansprüchen 1 oder 2,
**dadurch gekennzeichnet,**
daß die Stell-, Spann- und Festlegeelemente einen motorischen Antrieb mit Fernbedienung und Anzeige aufweisen.

6. Fahrzeuganhängerkupplung nach den Ansprüchen 1 oder 2,
**dadurch gekennzeichnet,**
daß die Stell-, Spann- und Festlegeelemente eine an sich bekannte Schnellösevorrichtung aufweisen.

7. Fahrzeuganhängerkupplung nach den Ansprüchen 1 oder 2 bis 5,
**dadurch gekennzeichnet,**
daß die Spannelemente aus Gasfedern (10) bestehen, die die Enden (6"') der Arme (6) der Spannzange voneinander wegdrücken.

8. Fahrzeuganhängerkupplung nach Anspruch 7, mit als einarmige Hebel ausgebildeten Armen, deren eines Endenpaar mit einem Bereich vor der Mitte der Kupplungskugel und seitlich von dieser angelenkt ist,
**dadurch gekennzeichnet,**
daß die Mittenabschnitte (6') der Arme (6) abgewinkelt kreuzweise übereinanderliegend in etwa parallel verlaufende Endabschnitte (6''') übergehen.

9. Fahrzeuganhängerkupplung nach Anspruch 7,
**dadurch gekennzeichnet,**
daß die Arme (6) als zweiarmige Hebel mit einem in einem Bereich zwischen der Mitte (M) der Kupplungskugel und den Enden der Arme angeordneten gemeinsamen Schwenkgelenk ausgebildet sind.

10. Fahrzeuganhängerkupplung nach den Ansprüchen 1 oder 2 und einem der Ansprüche 7 und 8,
**dadurch gekennzeichnet,**
daß zwischen der an dem Endabschnitt (6'') eines der Arme (6) angeordneten Gasfeder (10) und dem Endabschnitt (6''') des anderen Armes (6) ein zweiarmiger Hebel (61) angeordnet ist, der einerseits mit einer Lenkachse (60) an die Stoßstange (10a) der Gasfeder (10) und andererseits mit einer Lenkachse (61a) an dem Endabschnitt (6''') des anderen Armes (6) angelenkt ist, wobei die Lenksachse (60) an der Stoßstange (10a) der Gasfeder (10) in und außer einer Totpunktlage zwischen den beiden Anlenkachsen (60 und 61a) an den Endabschnitten (6''') beider Arme (6) bringbar ist.

11. Fahrzeuganhängerkupplung nach Anspruch 10,
**gekennzeichnet durch**
einen außerhalb der Endabschnitte (6''') der beiden Arme (6) an dem Hebel (61) angeordneten, etwa parallel zur Längsachse der Gasfeder (10) liegenden Handhebel (63).

12. Fahrzeuganhängerkupplung nach Anspruch 10,
**dadurch gekennzeichnet,**
daß die in und außer Totpunktlage bringbare Lenkerachse (160) des zweiarmigen Hebels in einem Lagerbock (170), der mit radialem Abstand (d) um eine lagerbolzenförmige Verlängerung (172) der Endabschnitte (106''') der Arme (6) schwenkbar ist.

13. Fahrzeuganhängerkupplung nach den Ansprüchen 11 und/oder 12,
**dadurch gekennzeichnet,**
daß die lagerbolzenförmige Verlängerung (172) um eine etwa senkrecht zur Lagerbolzenachse liegende Achse schwenkbar an den Armendabschnitt (106"') angelenkt ist.

14. Fahrzeuganhängerkupplung nach einem oder mehreren der Ansprüche 11 bis 13,
**dadurch gekennzeichnet,**
daß die lagerbolzenförmige Verlängerung (172) aus einem, auf eine an. den Armendabschnitt (106''') angelenkte U-Lasche (171) aufgesetzten Lagerbolzen besteht.

15. Fahrzeuganhängerkupplung nach einem oder mehreren der Ansprüche 11 bis 14,
**gekennzeichnet durch**
einen Handhebel (163), der um eine etwa senkrecht zur Lenkerachse (60) liegende Achse schwenkbar in dem Lagerbock (170) gelagert ist.

## Claims

1. A trailer-to-vehicle coupling having a friction brake consisting of a coupling ball (1) and a ball coupling housing (2) embracing it, where portions of the inner face of the ball coupling housing (2) exhibit recesses (2a) lying opposite one another in pairs, in which are arranged friction brake blocks (4) which may be pressed by positioning members against the surface of the coupling ball (1), the recesses in the ball coupling housing (2) being made as circular apertures (2a) in which the friction brake blocks (4) are guided by the inside areas of the apertures (2a) to float freely like pistons and are kept under elastic spring pressure,
**characterized in that**
the friction brake blocks (4) exhibit carriers (5) which may be acted upon symmetrically from the rear by the arms of clamping tongs (6) which consist of a bridge (8) embracing the front side of the periphery of the ball coupling housing (2) like a bow and connected firmly to it, and of tong arms (6) hinged to the ends of the bridge, and in which positioning, clamping and fixing members (9, 10) known in themselves are arranged between the tong arms (6).

2. A trailer-to-vehicle coupling as in Claim 1,
**characterized in that**
the clamping tongs are made as a clamping fork consisting of a single piece of spring steel the bowed bridge part (8) of which embraces the front side of the periphery of the ball coupling housing (2) and is able to slide up and down it,

3. A trailer-to-vehicle coupling as in Claim 1,
**characterized in that**
parts of the outer area of the coupling ball (1) are made as opposing friction areas for the friction brake blocks (4).

4. A trailer-to-vehicle coupling as in Claim 1,
**characterized in that**
the carriers (5) are connected detachably to the arms (6).

5. A trailer-to-vehicle coupling as in Claims 1 or 2,
**characterized in that**
the positioning, clamping and fixing members exhibit a motor drive with remote control and indication.

6. A trailer-to-vehicle coupling as in Claims 1 or 2,
**characterized in that**
the positioning, clamping and fixing members exhibit a quick-release device known in itself.

7. A trailer-to-vehicle coupling as in Claims 1 or 2 to 5,
**characterized in that**
the clamping members consist of pneumatic springs (10) whih force apart the ends (6"') of the arms (6) of the clamping tongs.

8. A trailer-to-vehicle coupling as in Claim 7, having arms made as one-armed levers, one pair of ends of which is hinged at a region before the centre of the coupling ball and at the side of it,
**characterized in that**
the middle portions (6") of the arms (6) being cranked to lie over one another crosswise, continue into end portions (6''') running approximately parallel.

9. A trailer-to-vehicle coupling as in Claim 7,
**characterized in that**
the arms (6) are made as two-armed levers having a common drag-link arranged in a region between the centre (M) of the coupling ball and the ends of the arms.

10. A trailer-to-vehicle coupling as in Claims 1 or 2 and one of the Claims 7 and 8,
**characterized in that**
between the pneumatic spring (10) arranged at the end portion (6"') of one of the arms (6) and the end portion (6"') of the other arm (6) a two-armed lever (61) is arranged, which is hinged at one side by a hingepin (60) to the thrustrod (10a) of the pneumatic spring (10) and at the other side by a hingepin (61a) to the end portion (6"') of the other arm, so that the hingepin (60) on the thrustrod (10a) of the pneumatic spring (10) may be brought into and out of a dead-centre position between the two hingepins (60 and 61a) on the end portions (6"') of the two arms (6).

11. A trailer-to-vehicle coupling as in Claim 10,
**characterized by**
a handle (63) arranged on the lever (61) outside the end portions (6'") of the two arms (6) and lying approximately in parallel with the longitudinal axis of the pneumatic spring (10).

12. A trailer-to-vehicle coupling as in Claim 10,
**characterized in that**
the hingepin (160) on the two-armed lever, which may be brought into and out of a dead-centre position, is supported *[=*"*gelagert ist"* - *missing from the German text of this Claim; see the main text, page XX, line ZZ*) in a bearing block (170) which is able to pivot with a radial clearance (d) about a prolongation (172) of the end portions (106"') of the arms (6), in the form of a bearing pin.

13. A trailer-to-vehicle coupling as in Claims 11 and/or 12,
**characterized in that**
the prolongation (172) in the form of a bearing pin is hinged onto the end portion (106"') of the arm to be able to pvot about an axis lying approximately perpendicular to the axis of the bearing pin.

14. A trailer-to-vehicle coupling as in one or more of the Claims 11 to 13,
**characterized in that**
the prolongation (172) in the form of a bearing pin consists of a bearing pin mounted on a U-shackle (171) hinged onto the end portion (106"') of the arm.

15. A trailer-to-vehicle coupling as in one or more of the Claims 11 to 14,
**characterized by**
a handle (163) which is supported to be able to pivot in the bearing block (170) about an axis lying approximately perpendicular to the hingepin (60).

## Revendications

1. Dispositif d'attelage de remorque pour véhicule, comportant un frein à friction consistant en une sphère d'accouplement (1) et en un boîtier d'accouplement à sphère (2) enveloppant celle-ci, des parties de la surface intérieure de l'enveloppe (2) de la sphère d'accouplement présentant des évidements opposés (2a) par paires l'un à l'autre, dans lesquels sont agencés des sabots de frein à friction (4) qui sont appuyables contre la surface de la sphère d'accouplement moyennant pression, à l'aide d'éléments de réglage, les évidements du boîtier de l'accouplement à sphère (2) étant agencés comme des ouvertures circulaires (2a) dans lesquelles les sabots de frein à friction (4) sont guidés par les faces intérieures de ces ouvertures (2a), en flottant librement à la manière d'un piston et sont maintenus sous une pression élastique (de ressort),
caractérisé en ce que les sabots de frein à friction (4) comportent des supports (5) qui sont commandables, par leur face arrière, par les bras d'une pince de serrage (6) qui consiste en un étrier (8) entourant à la manière d'un arc la face avant du boîtier d'accouplement à sphère (2) et solidaire de celui-ci et en des bras de pince (6) articulés aux extrémités de celui-ci, et des éléments de réglage, de serrage et de fixation (9,10) connus en soi étant agencés entre les bras (6).

2. Dispositif d'attelage de remorque pour véhicule selon la revendication 1 caractérisé en ce que la pince de serrage consiste en une fourche de serrage en une seule pièce d'acier à ressort dont la partie courbée en forme d'étrier (8) entoure la face avant du boîtier de l'accouplement (2) et est coulissable sur celui-ci vers le haut et vers le bas.

3. Dispositif d'attelage de remorque pour véhicule selon la revendication 1 caractérisé en ce que des parties de la surface externe de la sphère d'accouplement (1) consistent en des contre-surfaces de friction pour les sabots de freinage par friction (4).

4. Dispositif d'attelage de remorque pour véhicule selon la revendication 1 caractérisé en ce que les supports (5) sont reliés de façon démontable aux bras (6).

5. Dispositif d'attelage de remorque pour véhicule selon la revendication 1 ou 2 caractérisé en ce que les éléments de réglage, de serrage et de fixation comportent un moyen d'entraînement à moteur équipé d'une commande à distance et d'un affichage.

6. Dispositif d'attelage de remorque pour véhicule selon la revendication 1 ou 2 caractérisé en ce que les éléments de réglage, de serrage et de fixation comportent un dispositif à ouverture rapide connu en soi.

7. Dispositif d'attelage de remorque pour véhicule selon les revendications 1 ou 2 à 5 caractérisé en ce que les éléments de serrage consistent en des ressorts à gaz (10) qui écartent les extrémités (6"') des bras (6) de la pince de serrage.

8. Dispositif d'attelage de remorque pour véhicule selon la revendication 7 comportant des bras sous forme de leviers à une seule branche, dont l'une des paires d'extrémités est articulée dans une zone en amont du centre de la sphère d'accouplement et au côté de celle-ci,
caractérisé en ce que les parties centrales (6") des bras (6) se croisent mutuellement l'une au-dessus de l'autre en étant courbées et se prolongent dans des extrémités approximativement parallèles (6"').

9. Dispositif d'attelage de remorque pour véhicule selon la revendication 7 caractérisé en ce que les bras (6) consistent en des leviers à deux branches comportant une articulation à pivot commune dans une zone comprise entre le centre (M) de la sphère d'accouplement et les extrémités des bras.

10. Dispositif d'attelage de remorque pour véhicule selon les revendications 1 ou 2 et l'une des revendications 7 et 8 caractérisé en ce qu'un levier à deux bras (61) est agencé entre le ressort à gaz (10) monté sur l'extrémité (6"') de l'un des bras (6) et l'extrémité (6"') de l'autre bras (6), levier à deux bras (61) qui est articulé, d'une part, moyennant un axe (60), au poussoir (10a) du ressort à gaz (10) et, d'autre part, moyennant un axe (61a) à l'extrémité (6"') de l'autre bras, l'axe (60) monté sur le poussoir (10a) du ressort à gaz (10) étant positionnable en et hors d'une position de point mort, entre les deux axes (60 et 61a) aux extrémités (6"') des deux bras (6).

11. Dispositif d'attelage de remorque pour véhicule selon la revendication 10 caractérisé par un levier à main (63) situé en dehors des extrémités (6"') des deux bras (6) et monté sur le levier (61), approximativement parallèlement à l'axe longitudinal du ressort à gaz (10).

12. Dispositif d'attelage de remorque pour véhicule selon la revendication 10 caractérisé en ce que l'axe (160) du levier à deux bras positionnable en ou hors position de point mort est logé dans un support (170) qui est pivotable moyennant une distance radiale (d) autour d'un prolongement en forme de pivot (172) des extrémités (160"') des bras (6).

13. Dispositif d'attelage de remorque pour véhicule selon les revendications 11 et/ou 13 caractérisé en ce que le prolongement en forme de pivot (172) est articulé à l'extrémité (106"') de bras de manière pivotable autour d'un axe approximativement perpendiculaire à l'axe du pivot.

14. Dispositif d'attelage de remorque pour véhicule selon l'une ou plusieurs des revendications 11 à 13 caractérisé en ce que le prolongement en forme de pivot (172) consiste en un pivot monté sur une fixation en U (171) articulée sur l'extrémité de bras (106"').

15. Dispositif d'attelage de remorque pour véhicule selon l'une ou plusieurs des revendications 11 à 14 caractérisé par un levier à main (163) qui est logé dans le support (170) de manière pivotable autour d'un axe approximativement perpendiculaire à l'axe (60).
